# EUROPEAN PATENT APPLICATION

(11) **EP 4 753 025 A1**
(43) Date of publication of application: **03.06.2026**
(21) Application number: 24844369.9
(22) Date of filing: 27.05.2024
(51) Int. Cl.: H01M 10/6554

(54) **HEAT EXCHANGE PLATE AND BATTERY PACK CASE HAVING SAME, BATTERY PACK, AND VEHICLE**

(30) Priority: 26.07.2023 CN 202321991304 U
(71) Applicant: BYD Company Limited, Shenzhen, Guangdong 518118 (CN)
(72) Inventor: ZHANG, Yaosheng, Shenzhen, Guangdong 518118 (CN); ZHU, Liequn, Shenzhen, Guangdong 518118 (CN); HU, Shichao, Shenzhen, Guangdong 518118 (CN); WANG, Huanhuan, Shenzhen, Guangdong 518118 (CN); LAI, Qing, Shenzhen, Guangdong 518118 (CN)
(74) Representative: Mathys & Squire
(86) International application number: PCT/CN2024/095441
(87) International publication number: WO 2025/020674

(57) **Abstract**

A vehicle. The vehicle comprises a battery pack; the battery pack comprises a battery pack case; the battery pack case comprises a heat exchange plate; and the heat exchange plate comprises a runner plate, a sealing plate, and a supporting member. The two sides of the runner plate in the thickness direction are respectively a first side and a second side, and the runner plate is provided with a protruding portion on the first side. The sealing plate is arranged on the first side of the runner plate, and the orthographic projection of the sealing plate on the runner plate covers at least part of the protruding portion. The supporting member is arranged between the runner plate and the sealing plate for supporting.

## Description

### CROSS-REFERENCE TO RELATED APPLICATIONS

The present disclosure claims priority to Chinese Patent Application No. 202321991304.X filed with the China National Intellectual Property Administration on July 26, 2023, titled "HEAT EXCHANGE PLATE AND BATTERY PACK CASE HAVING SAME, BATTERY PACK, AND VEHICLE", which is incorporated herein by reference in its entirety.

### FIELD

The present disclosure relates to the field of battery pack technologies, specifically to a heat exchange plate, and a battery pack case, a battery pack and a vehicle having the same.

### BACKGROUND

In Cell-to-Body technology, a liquid cooling plate for heat exchange in a battery pack is located at an upper part of the battery pack. When the upper part of the battery pack needs to be sealed with a vehicle body of the entire vehicle, due to the uneven surface of the liquid cooling plate, it is difficult for the battery pack to achieve a sealed connection with the vehicle body.

### SUMMARY

The present disclosure aims to solve at least one of the technical problems existing in the prior art. Therefore, it is an object of the present disclosure to provide a heat exchange plate, and the heat exchange plate is convenient for realizing a sealed connection between a battery pack and a vehicle body.

A second object of the present disclosure is to provide a battery pack case having the above-described heat exchange plate.

A third object of the present disclosure is to provide a battery pack having the above-described heat exchange plate.

A fourth object of the present disclosure is to provide a vehicle having the above-described battery pack.

According to an embodiment of the first aspect of the present disclosure, the heat exchange plate includes a flow channel plate, a sealing plate, and a supporting member. Two sides of the flow channel plate in a thickness direction are respectively a first side and a second side, and the flow channel plate has a protrusion arranged on the first side. The sealing plate is arranged on the first side of the flow channel plate. An orthographic projection of the sealing plate on the flow channel plate covers at least a portion of the protrusion. The supporting member supports between the flow channel plate and the sealing plate.

According to the heat exchange plate of the embodiment of the present disclosure, the orthographic projection of the sealing plate on the flow channel plate covers at least a portion of the protrusion, the supporting member is arranged between the flow channel plate and the sealing plate, and the supporting member supports between the flow channel plate and the sealing plate. Thus, the sealing plate can be mounted flat on the flow channel plate without requiring special design of the structure of the heat exchange plate and the sealing plate. This improves the flatness of the sealing plate, thereby increasing the region of the heat exchange plate available for sealing with external structures. When the heat exchange plate is applied to the battery pack of a vehicle, it increases the contact region between the battery pack and the vehicle body, further achieving a sealed connection between the battery pack and the vehicle body.

According to some embodiments of the present disclosure, the flow channel plate includes a flow channel region and a non-flow channel region. The flow channel region is equipped with a flow channel. At least a portion of the protrusion corresponds to the flow channel. The non-flow channel region is arranged around the flow channel region. The orthographic projection of the sealing plate on the flow channel plate covers at least a portion of the non-flow channel region and at least a portion of the flow channel region.

According to some embodiments of the present disclosure, the supporting member supports between the non-flow channel region and the sealing plate.

According to some embodiments of the present disclosure, the supporting member has a frame-shaped structure, and the flow channel plate and the sealing plate are sealed and connected by the supporting member.

According to some embodiments of the present disclosure, an opening extending in the thickness direction of the flow channel plate is formed in the sealing plate. The sealing plate surrounds the entire outer periphery of the opening, and the opening is adapted to face the passenger compartment of the vehicle. The orthographic projection of the sealing plate on the flow channel plate covers a portion of the flow channel region.

According to some embodiments of the present disclosure, the heat exchange plate further includes a temperature equalizing plate, and the temperature equalizing plate is arranged on the second side of the flow channel plate.

According to some embodiments of the present disclosure, an insulating layer is arranged on the surface of the temperature equalizing plate away from the flow channel plate.

According to some embodiments of the present disclosure, the sealing plate, the supporting member, and the flow channel plate are joined into an integrated structure by welding.

According to some embodiments of the present disclosure, the supporting member is formed by tailor-welding a plurality of frame members.

According to some embodiments of the present disclosure, the flow channel plate includes a first side plate and a second side plate arranged in the thickness direction of the flow channel plate, a protrusion is arranged on the first side plate, and the protrusion and the second side plate jointly define a flow channel.

According to an embodiment of the second aspect of the present disclosure, a battery pack case 200 includes a battery tray and the heat exchange plate according to the embodiment of the first aspect of the present disclosure. The heat exchange plate is adapted to enclose with the battery tray to form a battery accommodating cavity, and the battery accommodating cavity is adapted to be located on the second side of the flow channel plate.

According to an embodiment of the third aspect of the present disclosure, a battery pack includes a battery pack case and a battery. The battery pack case includes a battery tray and a first heat exchange plate, the first heat exchange plate is the heat exchange plate according to the embodiment of the first aspect of the present disclosure described above, and the first heat exchange plate and the battery tray are enclosed to form the battery accommodating cavity. The battery accommodating cavity is located on the second side of the flow channel plate. The battery is accommodated in the battery accommodating cavity.

According to some embodiments of the present disclosure, the first heat exchange plate is arranged on the top of the battery tray. The battery pack further includes a second heat exchange plate, and the second heat exchange plate is arranged on the bottom of the battery tray.

According to an embodiment of the fourth aspect of the present disclosure, a vehicle includes the battery pack according to the embodiment of the third aspect of the present disclosure described above.

According to some embodiments of the present disclosure, the vehicle further includes a vehicle body, and the battery pack is arranged on the bottom of the vehicle body.

According to some embodiments of the present disclosure, the vehicle body includes a passenger compartment. An opening extending in the thickness direction of the flow channel plate is formed in the sealing plate, and the opening is arranged in a position corresponding to the passenger compartment.

According to some embodiments of the present disclosure, the vehicle further includes a sealing member. The sealing member surrounds the opening and the sealing member is arranged between the sealing plate and the vehicle body.

The additional aspects and advantages of the present disclosure will be partially set forth in the following description, and partially will become apparent from the following description, or be understood through the practice of the present disclosure.

### BRIEF DESCRIPTION OF THE DRAWINGS

The above and/or additional aspects and advantages of the present disclosure will become apparent and easily understandable from the description of the embodiments in conjunction with the following drawings, wherein:
FIG. 1 is an exploded view of a heat exchange plate according to an embodiment of the present disclosure;
FIG. 2 is a schematic view of the heat exchange plate according to an embodiment of the present disclosure;
FIG. 3 is a partial cross-sectional view taken along line A-A in FIG. 2;
FIG. 4 is an assembly schematic view of a battery pack and a sealing member according to an embodiment of the present disclosure;
FIG. 5 is an exploded view of the battery pack and the sealing member according to an embodiment of the present disclosure; and
FIG. 6 is a schematic block view of a vehicle according to an embodiment of the present disclosure.

Reference signs:
Vehicle 1000,
Heat exchange plate 100, Battery pack case 200, Battery pack 300,
Flow channel plate 1, First side plate 11, Protrusion 12, Second side plate 13, Flow channel 14, Flow channel region 15, Non-flow channel region 16, Sealing plate 2, Opening 21, Supporting member 3, Temperature equalizing plate 4, Insulating layer 41,
Passenger compartment 201, Sealing member 202, Battery tray 203, Battery 204, and Second heat exchange plate 205.

### DETAILED DESCRIPTION

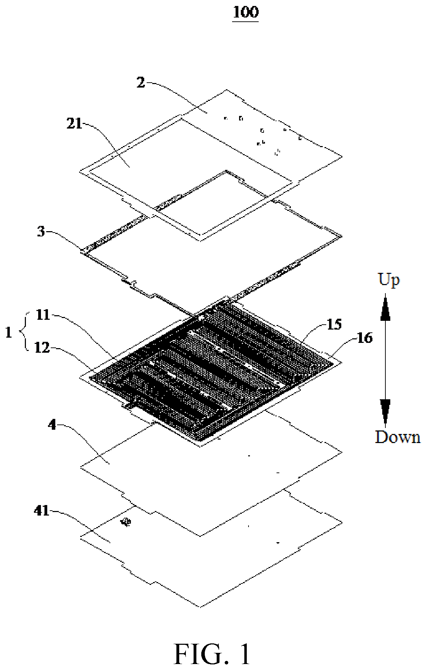

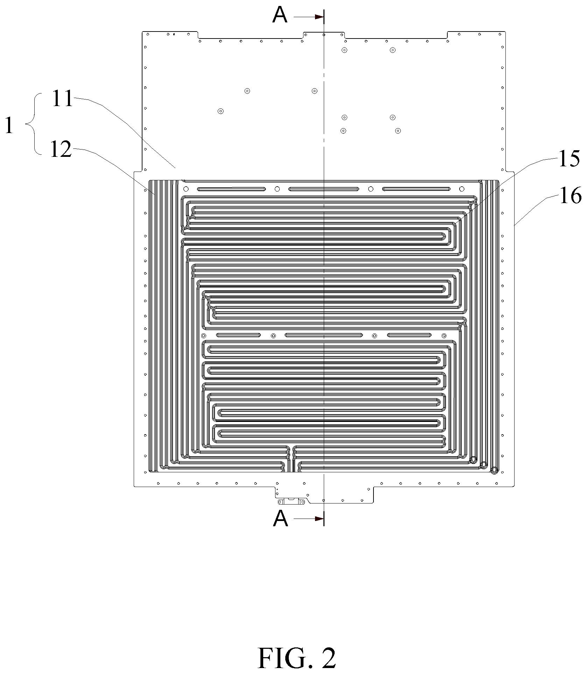

A heat exchange plate 100 according to an embodiment of the first aspect of the present disclosure will be described with reference to FIGS. 1 to 5. It should be noted that in the present disclosure, the application of the heat exchange plate 100 to a battery pack has been described as an example, but the present invention is not limited thereto.

As shown in FIGS. 1 to 5, the heat exchange plate 100 according to the embodiment of the present disclosure includes a flow channel plate 1, a sealing plate 2, and a supporting member 3.

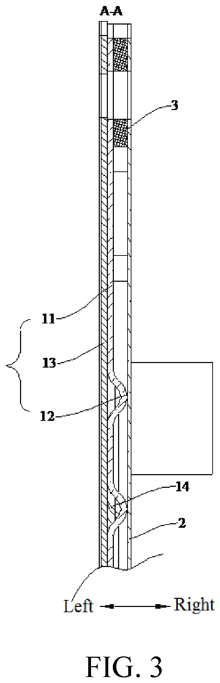

Specifically, two sides of the flow channel plate 1 in the thickness direction (for example, the up-down direction in FIG. 1 or the left-right direction in FIG. 3) are respectively a first side and a second side. It should be noted that since FIG. 1 shows an axonometric view of the flow channel plate 1, the thickness direction of the flow channel plate 1 does not strictly correspond to the above-described up-down direction, but substantially overlaps with the above-described up-down direction. The flow channel plate 1 is plate-shaped, and the thickness of the flow channel plate 1 is consistent with the thickness of a conventionally understood plate-like structure, and is generally the minimum unidirectional dimension of the plate-like structure.

The flow channel plate 1 has protrusion 12 arranged on the first side, and for example, the flow channel plate 1 includes a first side plate 11 and a second side plate 13 arranged in the thickness direction, and the protrusion 12 and the second side plate 13 jointly define the flow channel 14. The sealing plate 2 is arranged on the first side of the flow channel plate 1. The orthographic projection of the sealing plate 2 on the flow channel plate 1 covers at least a portion of the protrusion 12. The supporting member 3 supports between the flow channel plate 1 and the sealing plate 2.

Water or other fluid with good thermal conductivity can be injected into the flow channel 14 of the flow channel plate 1, so that the flow channel plate 1 can absorb heat generated by components in contact with the flow channel plate 1, such as battery cells, or heat of the thermally conductive liquid can be transferred to the components in contact with the flow channel plate 1, so as to adjust the temperature of the above components and maintain the temperature of the components stable.

The flow channel plate 1 has protrusion 12 arranged on the first side. For example, the flow channel plate 1 has a thin thickness in a region where the flow channel 14 is not arranged. In the region where the flow channel 14 is arranged, since it is necessary to leave a certain space inside for the flow channel 14, the protrusion 12 is formed in the region of the flow channel 14. In addition, other components (e.g., fasteners, etc.) may also form the protrusion 12 on the flow channel plate 1.

Optionally, the flow channel plate 1 may be integrally formed, or the flow channel plate 1 may be formed by fixing two independently-formed side plates together. For example, in the example of FIGS. 1 to 5, the heat exchange plate 100 may be mounted above the battery tray 203, and the flow channel plate 1 includes a first side plate 11 and a second side plate 13. The first side plate 11 of the flow channel plate 1 is away from the battery tray 203, and the second side plate 13 of the flow channel plate 1 is close to the battery tray 203. The protrusion 12 of the first side plate 11 extends in a direction away from the second side plate 13, the second side plate 13 may be a flat plate, and the protrusion 12 and the second side plate 13 jointly define the flow channel 14. The first side plate 11 and the second side plate 13 are independently molded and then fixed together to form the flow channel plate 1.

The orthographic projection of the sealing plate 2 on the flow channel plate 1 covers at least a portion of the protrusion 12. This can be either that the orthographic projection of the sealing plate 2 on the flow channel plate 1 covers all the protrusion 12, or that the orthographic projection of the sealing plate 2 on the flow channel plate 1 covers only a portion of the protrusion 12. That is, "cover" may mean covering the entire protrusion or may mean covering a portion of the protrusion 12. Specifically, referring to FIG. 1, when the thickness direction of the flow channel plate 1 is the same as the up-down direction, and the first side is above the second side, the sealing plate 2 is disposed above at least a portion of the protrusion 12. Further, the orthographic projection of the sealing plate 2 on the flow channel plate 1 may cover a region other than the protrusion 12 of the flow channel plate 1. It should be noted that since the flow channel plate 1 is not a flat plate, when understanding the meaning of the orthographic projection of the sealing plate 2 on the flow channel plate 1, the flow channel plate 1 can be approximately regarded as a flat plate coplanar with the flat part of the actual flow channel plate 1.

Referring to FIG. 1, the orthographic projection of the sealing plate 2 on the flow channel plate 1 covers at least a portion of the protrusion 12, that is, the sealing plate 2 can provide more planes for sealing the heat exchange plate 100 with external structures. The sealing plate 2 is a plate for sealing the heat exchange plate 100 with an external structure, and is used to provide a plane for sealing the heat exchange plate 100 with the external structure, for example, the external structure may be a vehicle body, and the heat exchange plate 100 is sealed with the vehicle body by the sealing plate 2 to isolate the passenger compartment 201 from the outside and prevent air, water, or the like from entering the passenger compartment 201.

The supporting member 3 may be arranged in a gap between the flow channel 14 (not shown); or the supporting member 3 is arranged at the edge of the flow channel plate 1 (as shown in FIG. 1); or the supporting members 3 are arranged in the gap between the flow channel 14 and the edge of the flow channel plate 1. The supporting member 3 may be disposed on the flow channel plate 1 offset from the flow channel 14. The sealing plate 2 is located on the side of the supporting member 3 away from the flow channel plate 1.

The supporting member 3 supports between the flow channel plate 1 and the sealing plate 2, and it will be understood that the surface of the supporting member 3 close to the sealing plate 2 is at least flush with the end of the protrusion 12 away from the second side of the flow channel plate 1. The surface of the supporting member 3 close to the sealing plate 2 can be just flush with the end of the protrusion 12 away from the second side of the flow channel plate 1, or the surface of the supporting member 3 close to the sealing plate 2 can be slightly higher than the end of the protrusion 12 away from the second side of the flow channel plate 1.

By supporting the supporting member 3 between the flow channel plate 1 and the sealing plate 2, the supporting member 3 can be used to fill the height difference caused by the protrusion 12, and the sealing plate 2 can be easily mounted without requiring special design of the structure of the flow channel plate 1 or the sealing plate 2 (examples of such special designs include thickening the region of the flow channel plate 1 where no flow channel 14 is arranged, or thickening or bending the portion of the sealing plate 2 that corresponds to the region of the flow channel plate 1 without a flow channel 14). Thus, the sealed connection between the battery pack and the vehicle body can be realized, and the manufacturing process of the heat exchange plate 100 can be simplified.

Generally speaking, in order to improve the heat exchange efficiency of the heat exchange plate 100 in a limited space, the region of the flow channel plate 1 that is equipped with a flow channel 14 occupies most of the flow channel plate 1, and only a small portion of the region is left without a flow channel 14 or with only a small number of flow channels 14. The protrusion 12 formed by the flow channel 14 or other components make the regions with the flow channel 14 difficult to be used for sealing with external structures, while the small regions without a flow channel 14 or with only a small number of flow channels 14 make it difficult to provide sufficient region for the heat exchange plate 100 to be fixedly connected and/or sealed with other structures (such as the battery tray 203, the vehicle body, etc.).

According to the heat exchange plate 100 of the embodiment of the present disclosure, the orthographic projection of the sealing plate 2 on the flow channel plate 1 covers at least a portion of the protrusion 12, the supporting member 3 is arranged between the flow channel plate 1 and the sealing plate 2, and the supporting member 3 supports between the flow channel plate 1 and the sealing plate 2. Thus, the sealing plate 2 can be mounted flat on the flow channel plate 1 without requiring special design of the structure of the heat exchange plate 100 and the sealing plate 2. This improves the flatness of the sealing plate 2, thereby increasing the region of the heat exchange plate 100 available for sealing with external structures. When the heat exchange plate 100 is applied to the battery pack of a vehicle, it increases the contact region between the battery pack and the vehicle body, further achieving a sealed connection between the battery pack and the vehicle body.

According to some embodiments of the present disclosure, referring to FIG. 1, the flow channel plate 1 includes a flow channel region 15 and a non-flow channel region 16. The non-flow channel region 16 is arranged around the flow channel region 15. The flow channel region 15 is equipped with a flow channel 14. At least a portion of the protrusion 12 corresponds to the flow channel 14, and the orthographic projection of the sealing plate 2 on the flow channel plate 1 covers at least a portion of the non-flow channel region 16 and at least a portion of the flow channel region 15. The non-flow channel region 16 can be equipped with no flow channel 14 at all, or only a small number of flow channels 14 can be equipped.

Specifically, the orthographic projection of the sealing plate 2 on the flow channel plate 1 covers at least a portion of the non-flow channel region 16, and the orthographic projection of the sealing plate 2 on the flow channel plate 1 can cover a portion of the non-flow channel region 16 or all of the non-flow channel region 16. The orthographic projection of the sealing plate 2 on the flow channel plate 1 covers at least a portion of the flow channel region 15, and the orthographic projection of the sealing plate 2 on the flow channel plate 1 can cover a portion of the flow channel region 15 or all of the flow channel region 15. Referring to FIG. 1, when the thickness direction of the flow channel plate 1 is the same as the up-down direction, and the first side is above the second side, the sealing plate 2 extends from above the non-flow channel region 16 to above the flow channel region 15.

It will be understood that, in order to improve the heat exchange efficiency of the heat exchange plate 100 in a limited space, generally speaking, the region of the flow channel plate 1 that is equipped with a flow channel 14 occupies most of the flow channel plate 1, and only a small portion of the region at the edge is left without a flow channel 14 or with only a small number of flow channels 14. That is to say, the width dimension of the non-flow channel region 16 is usually small, making it difficult to provide sufficient region for the heat exchange plate 100 to be fixedly connected with other structures (such as the battery tray 203, the vehicle body, etc.). In particular, for vehicles using Cell-to-Body (CTB) technology, the upper part of the battery pack needs to be sealed with the entire vehicle's body to form a passenger compartment 201 and an external non-passenger compartment. When the heat exchange plate 100 is applied above the battery pack, the surface of the flow channel region 15 is uneven due to the presence of flow channel 14, making it difficult to be used for fixing or sealing with the battery pack and/or the vehicle body, while the region of the non-flow channel region 16 is small, and the width of the remaining non-flow channel region 16 is narrow except for the region used for fixing with the battery tray 203, and it is difficult to provide sufficient region for sealing with the vehicle body. Through the structural design of the aforementioned flow channel plate 1, sealing plate 2, and supporting member 3, the area of the heat exchange plate 100 for sealing with external structures (such as the vehicle body) can be increased, and the sealing effect can be improved, thereby ensuring the reliability and safety of the battery pack and the vehicle.

According to some embodiments of the present disclosure, the supporting member 3 supports between the non-flow channel region 16 and the sealing plate 2. That is to say, the supporting member 3 is arranged in a position corresponding to the non-flow channel region 16 (a region other than the protrusion 12 on the first side of the flow channel plate 1).

According to some embodiments of the present disclosure, the supporting member 3 has a frame-shaped structure, and the flow channel plate 1 and the sealing plate 2 are sealed and connected by the supporting member 3. In other words, the flow channel plate 1 and the sealing plate 2 are sealed and connected at the position of the supporting member 3. With this arrangement, the supporting member 3 supports the edge of the sealing plate 2 on the outer peripheral side of the entire flow channel 14, and while increasing the stability of the sealing plate 2, the structure of the supporting member 3 is simpler, facilitating processing and reducing the weight of the heat exchange plate 100. At the same time, the flow channel plate 1 and the sealing plate 2 are sealed and connected by the supporting member 3, which can prevent external gases, liquids, and the like of the vehicle from entering between the flow channel plate 1 and the sealing plate 2. Thus, when the heat exchange plate 100 is applied to the battery pack of a vehicle, it can prevent external gases or liquids from entering the passenger compartment 201 and reduce heat exchange between the protrusion 12 and the external environment, thereby improving the heat exchange efficiency between the flow channel plate 1 and the components in contact with the flow channel plate 1, such as battery cells.

According to some embodiments of the present disclosure, an opening 21 extending in the thickness direction of the flow channel plate 1 is formed in the sealing plate 2. The sealing plate 2 surrounds the entire outer periphery of the opening 21, and the opening 21 is adapted to face the passenger compartment 201 of the vehicle. The orthographic projection of the sealing plate 2 on the flow channel plate 1 covers a portion of the flow channel region 15. Referring to the examples in FIGS. 1 to 4, a rectangular opening 21 is formed through the sealing plate 2, and the size of the opening 21 corresponds to the size of the passenger compartment 201 of the vehicle. This can reduce the weight of the heat exchange plate 100. In addition, the portion of the sealing plate 2 where the opening 21 is not formed serves as a fixing point for securing the heat exchange plate 100 to the components of the entire vehicle, so that the heat exchange plate 100 and the non-passenger compartment 201 of the vehicle body can be easily connected, and the battery pack can be stably mounted on the vehicle body while ensuring that the sealing plate 2 has good structural strength.

In some embodiments, referring to FIG. 1, the heat exchange plate 100 further includes a temperature equalizing plate 4, and the temperature equalizing plate 4 is arranged on the second side of the flow channel plate 1. For example, the temperature equalizing plate 4 is arranged on the second side plate 13. In this way, the heat in the flow channel 14 is uniformly distributed on the temperature equalizing plate 4 through thermal conduction, and then the temperature equalizing plate 4 is used to adjust the components in contact with the heat exchange plate 100, such as battery cells, ensuring the temperature consistency of the battery cells in the battery pack.

In some embodiments, an insulating layer 41 is arranged on the surface of the temperature equalizing plate 4 away from the flow channel plate 1. As shown in FIG. 1, the insulating layer 41 is arranged on the side of the temperature equalizing plate 4 away from the flow channel plate 1, i.e., facing the battery cells. By arranging the insulating layer 41, the insulation protection performance of the temperature equalizing plate 4 is effectively enhanced, thereby preventing the thermal runaway of battery cells from transferring to the temperature equalizing plate 4 and causing arcing and fire, and further improving the operational safety of the battery pack.

In some embodiments, the sealing plate 2, the supporting member 3, and the flow channel plate 1 are joined into an integrated structure by welding. The type of welding is not particularly limited, for example, the sealing plate 2, the supporting member 3, and the flow channel plate 1 can be joined into an integrated structure by brazing. Brazing technology is a method that uses a material with a lower melting point than the base metal as the brazing filler metal. It involves heating the workpieces and the brazing filler metal to a temperature higher than the melting point of the brazing filler metal but lower than that of the base metal (keeping the base metal in a solid state). The liquid brazing filler metal then fills the joint gap through its wetting action and diffuses with the base metal to achieve the connection of the welded workpieces. Common types of brazing include soldering, brazing with copper, and lead coating. The sealing plate 2, the supporting member 3, and the flow channel plate 1 are joined into an integrated structure by brazing, which features low heating temperature, minimal deformation of the sealing plate 2, the supporting member 3, and the flow channel plate 1, flat and neat joint surfaces, and high production efficiency.

In some embodiments, the supporting member 3 can be formed by tailor-welding a plurality of frame members. Optionally, the supporting member 3 can be formed by brazing and assembling four frame members. In the description of the disclosure, the term "a plurality of" means two or more. Thus, the structural strength of the supporting member 3 is ensured while simplifying the production process of the supporting member 3.

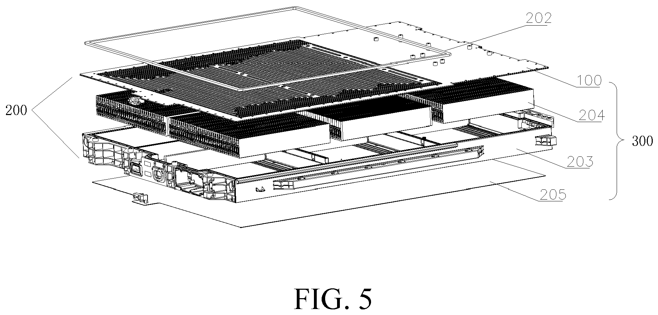

In some embodiments, the flow channel plate 1 includes a first side plate 11 and a second side plate 13 arranged in the thickness direction of the flow channel plate 1, a protrusion 12 is arranged on the first side plate 11, and the protrusion 12 and the second side plate 13 jointly define the flow channel 14. For example, in the example of FIG. 5, the heat exchange plate 100 may be mounted above the battery tray 203, and the flow channel plate 1 includes a first side plate 11 and a second side plate 13. The first side plate 11 of the flow channel plate 1 is away from the battery tray 203, and the second side plate 13 of the flow channel plate 1 is close to the battery tray 203. The protrusion 12 of the first side plate 11 extends in a direction away from the second side plate 13, the second side plate 13 may be a flat plate, and the protrusion 12 and the second side plate 13 jointly define the flow channel 14. The first side plate 11 and the second side plate 13 are independently molded and then fixed together to form the flow channel plate 1. This structure simplifies both the structure of the flow channel plate 1 and the manufacturing process.

A battery pack case 200 according to an embodiment of the second aspect of the present disclosure includes a battery tray 203 and the heat exchange plate 100 according to the embodiment of the first aspect of the present disclosure as described above. The heat exchange plate 100 is adapted to enclose with the battery tray 203 to form a battery accommodating cavity, and the battery accommodating cavity is adapted to be located on the second side of the flow channel plate 1. For example, as shown in FIG. 5, the top of the battery tray 203 is arranged in an open manner, and the heat exchange plate 100 according to the embodiment of the first aspect of the present disclosure is arranged at the opening on the top of the battery tray 203. The battery tray 203 and the heat exchange plate 100 are enclosed to form the battery accommodating cavity, the battery accommodating cavity is located below the flow channel plate 1, and the battery accommodating cavity is adapted to accommodate the battery 204.

The battery pack case 200 according to the embodiment of the present disclosure, by adopting the above-mentioned heat exchange plate 100, can ensure the safety and stability of the driving process when used in a vehicle battery pack.

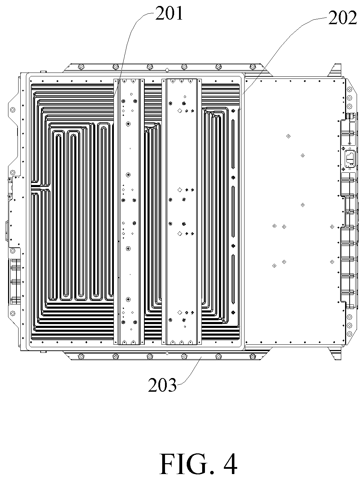

As shown in FIGS. 4 and 5, a battery pack 300 according to an embodiment of the third aspect of the present disclosure includes a battery pack case 200 and a battery 204. The battery pack case 200 includes a battery tray 203 and a first heat exchange plate, the first heat exchange plate is the heat exchange plate 100 according to the embodiment of the first aspect of the present disclosure described above, and the heat exchange plate 100 and the battery tray 203 are enclosed to form the battery accommodating cavity. The battery 204 is accommodated in the battery accommodating cavity. The heat exchange plate 100 is arranged on the top of the battery tray 203, and the heat exchange plate 100 is in contact with the top of the battery 204. The battery accommodating cavity of the battery tray 203 is adapted to place the battery 204, the heat exchange plate 100 seals one side of the battery tray 203 in the thickness direction, and the heat exchange plate 100 can exchange heat with the battery 204, thereby realizing the heat adjustment of the battery 204, maintaining the internal temperature of the battery pack 300 stable, and ensuring the normal operation of the battery pack 300.

The battery pack 300 according to the embodiment of the present disclosure, by adopting the above-mentioned heat exchange plate 100, can ensure the safety and stability of the driving process when used in a vehicle.

In some embodiments, the first heat exchange plate is arranged on the top of the battery tray 203; the battery pack 300 further includes a second heat exchange plate 205, and the second heat exchange plate 205 is arranged on the bottom of the battery tray 203. Thus, the first heat exchange plate is arranged on the top of the battery pack 300 and the second heat exchange plate 205 is arranged on the bottom of the battery pack 300, thereby enhancing the efficiency of regulating the internal temperature of the battery pack 300 and further improving the operational stability of the battery pack 300.

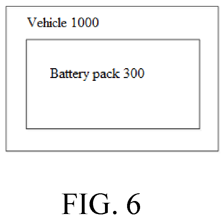

A vehicle 1000 according to an embodiment of the fourth aspect of the present disclosure includes the battery pack 300 according to the embodiment of the third aspect of the present disclosure described above, as shown in FIG. 6.

The vehicle 1000 according to the embodiment of the present disclosure, by adopting the above-mentioned battery pack 300, ensures the safety and stability of the vehicle 1000 during driving and reduces the maintenance cost of the vehicle 1000.

In some embodiments, the vehicle 1000 further includes a vehicle body, and the battery pack 300 is arranged on the bottom of the vehicle body. In this case, the first side of the flow channel plate 1 faces the vehicle body.

In some embodiments, referring to FIG. 4, the vehicle body includes a passenger compartment 201. An opening 21 extending in the thickness direction of the flow channel plate 1 is formed in the sealing plate 2, and the opening 21 is arranged in a position corresponding to the passenger compartment 201. This arrangement reduces the weight of the heat exchange plate 100 while facilitating the installation of the heat exchange plate 100 on the vehicle body.

In some embodiments, the vehicle 1000 further includes a sealing member 202. The sealing member 202 surrounds the opening 21 and the sealing member 202 is arranged between the sealing plate 2 and the vehicle body. For example, as shown in FIG. 5, the sealing member 202 is rectangular in shape, and the sealing member 202 is arranged around the edge of the opening 21. By arranging the sealing member 202 between the opening 21 of the sealing plate 2 and the vehicle body, the sealing performance between the battery pack 300 and the vehicle body can be enhanced.

Optionally, the sealing member 202 can be sealing foam.

Other components and operations of the battery pack 300 and the vehicle 1000 according to the embodiments of the present disclosure are known to a person skilled in the art and will not be described in detail herein.

In the description of the present disclosure, it will be understood that terms such as "thickness", "up", "down", "front", "rear", "top", "bottom", "inner", "outer", "axial", "radial", and "circumferential" indicating orientations or positional relationships are based on the orientations or positional relationships shown in the accompanying drawings. These terms are only used to facilitate the description of the present disclosure and simplify the description, and do not indicate or imply that the device or element referred to must have a specific orientation, be constructed and operated in a specific orientation. Therefore, they shall not be construed as limiting the present disclosure.

In the description of the present disclosure, it will be noted that unless otherwise clearly specified and defined, the terms "installation", "connection" and "linkage" will be understood in a broad sense. For example, they may refer to fixed connection, detachable connection, or integral connection; they may refer to mechanical connection or electrical connection; they may refer to direct connection, or indirect connection through an intermediate medium, or internal communication between two elements. For a person skilled in the art, the specific meanings of the above terms in the present disclosure will be understood according to specific circumstances.

In the description of this specification, references to terms such as "one embodiment", "some embodiments", "schematic embodiment", "example", "specific example", or "some examples" mean that a specific feature, structure, material, or characteristic described in conjunction with the embodiment or example is included in at least one embodiment or example of the present disclosure. In this specification, the schematic representations of the above terms do not necessarily refer to the same embodiment or example.

Although the embodiments of the present disclosure have been shown and described, a person skilled in the art will understand that various changes, modifications, substitutions, and variations can be made to these embodiments without departing from the principles and purposes of the present disclosure. The scope of the present disclosure is defined by the claims and their equivalents.

## Claims

1. A heat exchange plate (100), comprising:
a flow channel plate (1), two sides of the flow channel plate (1) in the thickness direction being respectively a first side and a second side, and the flow channel plate (1) having a protrusion (12) arranged on the first side;
a sealing plate (2), the sealing plate (2) being arranged on the first side of the flow channel plate (1), an orthographic projection of the sealing plate (2) on the flow channel plate (1) covering at least a portion of the protrusion (12); and
a supporting member (3), the supporting member (3) being supporting between the flow channel plate (1) and the sealing plate (2).

2. The heat exchange plate (100) according to claim 1, wherein the flow channel plate (1) comprises:
a flow channel region (15), the flow channel region (15) being equipped with a flow channel (14), and at least a portion of the protrusion (12) corresponding to the flow channel (14); and
a non-flow channel region (16), the non-flow channel region (16) being arranged around the flow channel region (15), and an orthographic projection of the sealing plate (2) on the flow channel plate (1) covering at least a portion of the non-flow channel region (16) and at least a portion of the flow channel region (15).

3. The heat exchange plate (100) according to claim 2, wherein the supporting member (3) supports between the non-flow channel region (16) and the sealing plate (2).

4. The heat exchange plate (100) according to any one of claims 1 to 3, wherein the supporting member (3) has a frame-shaped structure, and the flow channel plate (1) and the sealing plate (2) are sealed and connected by the supporting member (3).

5. The heat exchange plate (100) according to claim 2 or 3, wherein an opening (21) extending in the thickness direction of the flow channel plate (1) is formed in the sealing plate (2), the sealing plate (2) surrounds the entire outer periphery of the opening (21), and the opening (21) is adapted to face the passenger compartment (201) of the vehicle; and the orthographic projection of the sealing plate (2) on the flow channel plate (1) covers a portion of the flow channel region (15).

6. The heat exchange plate (100) according to any one of claims 1 to 5, wherein the heat exchange plate further comprises a temperature equalizing plate (4), and the temperature equalizing plate (4) is arranged on the second side of the flow channel plate (1).

7. The heat exchange plate (100) according to claim 6, wherein an insulating layer (41) is arranged on a surface of the temperature equalizing plate (4) away from the flow channel plate (1).

8. The heat exchange plate (100) according to any one of claims 1 to 7, wherein the sealing plate (2), the supporting member (3), and the flow channel plate (1) are joined into an integrated structure by welding.

9. The heat exchange plate (100) according to any one of claims 1 to 8, wherein the supporting member (3) is formed by tailor-welding a plurality of frame members.

10. The heat exchange plate (100) according to any one of claims 1 to 9, wherein the flow channel plate (1) comprises a first side plate (11) and a second side plate (13) arranged in the thickness direction of the flow channel plate (1), the protrusion (12) is arranged on the first side plate (11), and the protrusion (12) and the second side plate (13) jointly define a flow channel (14).

11. A battery pack case (200), comprising:
a battery tray (203); and
the heat exchange plate (100) according to any one of claims 1 to 10, the heat exchange plate (100) being adapted to enclose with the battery tray (203) to form a battery accommodating cavity, and the battery accommodating cavity being adapted to be located on the second side of the flow channel plate (1).

12. A battery pack (300), comprising:
a battery pack case (200), the battery pack case (200) comprising a battery tray (203) and a first heat exchange plate, the first heat exchange plate being the heat exchange plate (100) according to any one of claims 1 to 10, the first heat exchange plate and the battery tray (203) being enclosed to form a battery accommodating cavity, and the battery accommodating cavity being located on the second side of the flow channel plate (1); and
a battery (204), the battery (204) being accommodated in the battery accommodating cavity.

13. The battery pack (300) according to claim 12, wherein the first heat exchange plate is arranged on the top of the battery tray (203); and the battery pack (300) further comprises a second heat exchange plate (205), and the second heat exchange plate (205) is arranged on the bottom of the battery tray (203).

14. A vehicle (1000) comprising the battery pack (300) according to claim 12 or 13.

15. The vehicle (1000) according to claim 14, wherein the vehicle further comprises a vehicle body, and the battery pack (300) is arranged on the bottom of the vehicle body.

16. The vehicle (1000) according to claim 15, wherein the vehicle body comprises a passenger compartment (201); an opening (21) extending in a thickness direction of the flow channel plate (1) is formed in the sealing plate (2), and the opening (21) is arranged in a position corresponding to the passenger compartment (201).

17. The vehicle (1000) according to claim 16, wherein the vehicle (1000) further comprises a sealing member (202), the sealing member (202) surrounds the opening (21), and the sealing member (202) is arranged between the sealing plate (2) and the vehicle body.
